(19) Europäisches Patentamt
European Patent Office
Office européen des brevets

(11) Publication number: **0 237 849 B1**

(12) **EUROPEAN PATENT SPECIFICATION**

(45) Date of publication of patent specification: **11.03.92**

(51) Int. Cl.⁵: **C08G 73/14**, C08G 69/14, C08G 81/00, C08L 79/08, C08L 77/02

(21) Application number: **87102812.2**

(22) Date of filing: **28.09.83**

(60) Publication number of the earlier application in accordance with Art.76 EPC: **0 104 659**

(54) **Process for preparing poly(etherimide)-polylactam block copolymers.**

(30) Priority: **29.09.82 US 426732**

(43) Date of publication of application:
**23.09.87 Bulletin 87/39**

(45) Publication of the grant of the patent:
**11.03.92 Bulletin 92/11**

(84) Designated Contracting States:
**AT BE CH DE FR GB IT LI LU NL SE**

(56) References cited:
**DE-A- 1 420 598**
**FR-A- 2 069 253**
**FR-A- 2 197 034**
**FR-A- 2 472 586**

**PATENT ABSTRACTS OF JAPAN, vol. 5, no. 180 (C-79)[852], 19th November 1981; & JP - A - 56 103 225 (TOYO BOSEKI) 18-08-1981**

(73) Proprietor: **AMOCO CORPORATION**
**200 East Randolph Drive P.O. Box 5910-A**
**Chicago Illinois 60680(US)**

(72) Inventor: **Robeson, Lloyd Mahlon**
**Road 1 Box 244**
**Whitehouse Station New Jersey 08889(US)**
Inventor: **Matzner, Markus**
**23 Marshall Drive**
**Edison New Jersey 08817(US)**

(74) Representative: **Barz, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz**
**Siegfriedstrasse 8**
**W-8000 München 40(DE)**

**EP 0 237 849 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention is directed to a process for preparing certain poly(etherimide)-polylactam block copolymers.

Poly(etherimide) polymers are high performance engineering polymers. These polymers have a high continuous-use temperature, flame retardance, low smoke evolution, creep resistance, and good electrical properties. These resins can be injection molded, extruded into profiles, sheets or films and blow molded. However, poly(etherimide) polymers are susceptible to premature failure in certain environments such as in chlorinated hydrocarbons.

Poly(etherimide) polymers are molded at temperatures of from about 399 to about 438 ° C (about 750 to about 820 ° F). These high molding temperatures tend to have a detrimental effect upon the properties of the polymer.

Thus, there is a desire to improve the chemical resistance of poly(etherimide) polymers to make them more useful in environments where they are susceptible to premature failure without essentially affecting their mechanical properties.

The present invention provides a process for preparing a block copolymer comprising one or two blocks of lactam polymer and one block of a poly(etherimide) polymer which comprises anionically polymerizing a lactam monomer with a catalyst-initiator system comprising, as the initiator, one or more poly(etherimides) of formulae (I) and (II) given hereinafter.

FR-A-2,472,586 is directed to heat-curable compositions which comprise (a) a prepolymer obtained by the reaction of certain N,N'-bis-imides of unsaturated dicarboxylic acids with a primary polyamine and (b) a lactam monomer. Upon heating at elevated temperature said compositions are cured to afford thermoset articles.

FR-A-2,069,253 describes a process for the preparation of polyamide-imides by reaction of polyamides, certain carboxylic acid anhydrides and isocyanates. Particularly noteworthy is the fact that said process employs a preformed polyamide which is not even necessarily derived from a lactam.

FR-A-2,474,515 discloses polymers which may be obtained by reacting a certain aromatic bis(ether anhydride) with isophthaloyl or terephthaloyl chloride and an organic primary diamine.

The poly(etherimide) polymers suitable for use in this invention are known in the art and are described in, for example, US-A-3,847,867, 3,838,097 and 4,107,147.

Said poly(etherimide) polymers are of the following formulae:

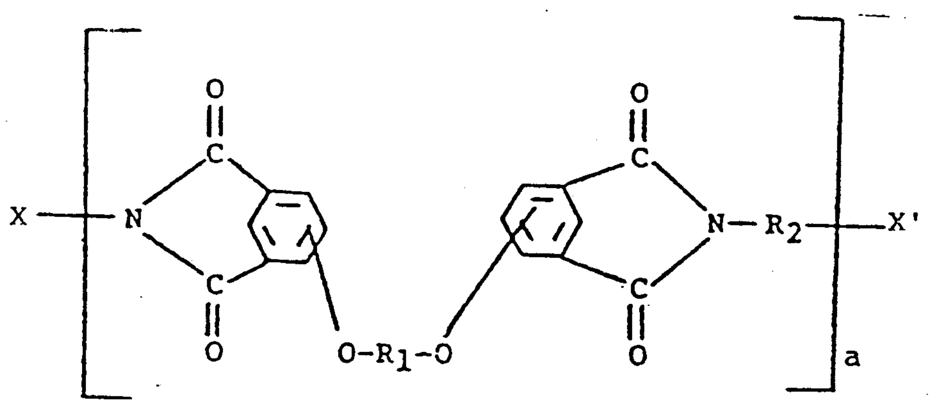

(I)

wherein a is an integer greater than 1, preferably from about 10 to about 10,000 or more, $-O-R_1-O-$ is attached to the 3 or 4 and 3' or 4' positions and $R_1$ is selected from (a) a substituted or unsubstituted aromatic radical of the formula:

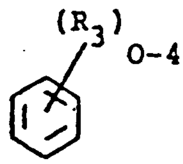

, or

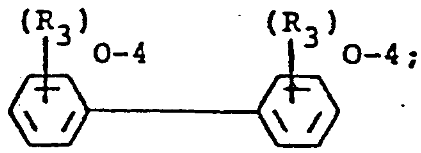

(b) a divalent radical of the formula:

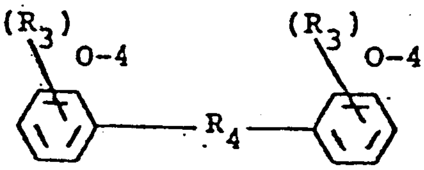

wherein $R_3$ is independently $C_1$ to $C_6$ alkyl, or halogen and
$R_4$ is selected from -O-, -S-,

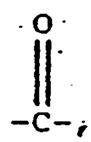

SO, $-SO_2-$ alkylene of 1 to 6 carbon atoms, cycloalkylene of 4 to 8 carbon atoms, alkylidene of 1 to 6 carbon atoms or cycloalkylidene of 4 to 8 carbon atoms, $R_2$ is selected from an aromatic hydrocarbon radical having from 6-20 carbon atoms and halogenated derivatives thereof, or alkyl substituted derivatives thereof, wherein the alkyl group contains 1 to 6 carbon atoms, alkylene and cycloalkylene radicals having from 2 to 20 carbon atoms, $C_2$-$C_8$ alkylene terminated polydiorganosiloxane and a divalent radical of the formula

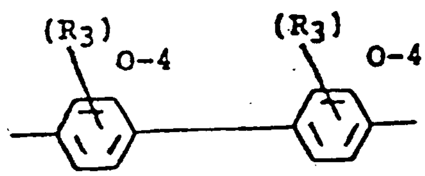

wherein the radicals $R_3$ are as previously defined; and X and X' are independently halogen, $NO_2$ or an anhydride terminated moiety

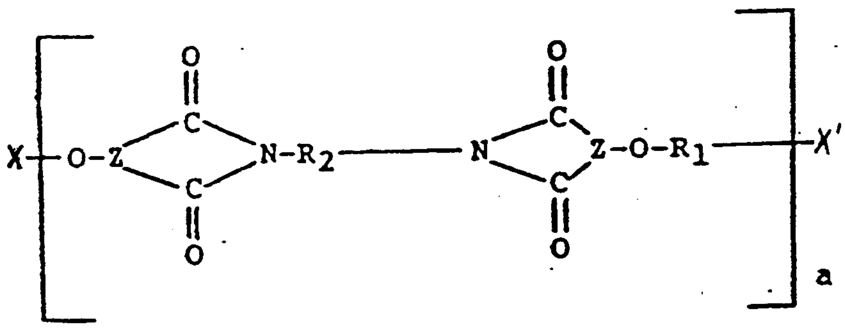

(II)

wherein -O-Z is a member selected from

(a) 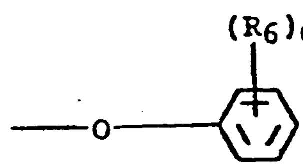

wherein $R_6$ is independently hydrogen, lower alkyl or lower alkoxy

(b) 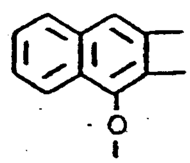 and,

(c) 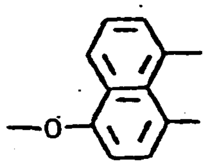

wherein the oxygen may be attached to either ring and located ortho or para to one of the bonds of the imide carbonyl groups and $R_1$ $R_2$, X, X' and a are as previously defined.

These polyetherimides are prepared by methods well known in the art as set forth in, for example, US-A-3,833,544, 3,887,588, 4,017,511, 3,965,125 and 4,024,110.

The polyetherimides of Formula (I) can, for example, be obtained by any of the methods well-known to those skilled in the at including the reaction of any aromatic bis(ether anhydride)s of the formula

(III) 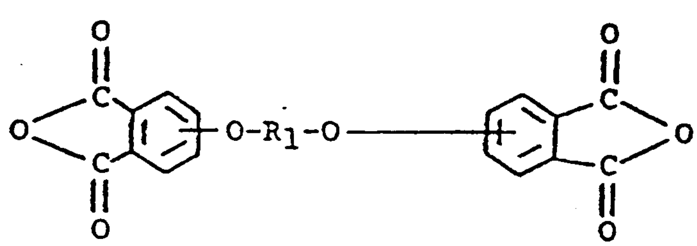

where $R_1$ is as defined hereinbefore, with a diamino compound of the formula

(IV) $H_2N-R_2-NH_2$

where $R_2$ is as defined hereinbefore. In general, the reactions can be advantageously carried out employing well-known solvents, e.g., o-dichlorobenzene, m-cresol/toluene, N,N-dimethylacetamide, etc., in which to

effect interaction between the dianhydrides and diamines, at temperatures of from about 20 to about 250°C. Alternatively, the polyetherimides can be prepared by melt polymerization of any dianhydride of Formula III with any diamino compound of Formula IV while heating the mixture of the ingredients at elevated temperatures with concurrent intermixing. Generally, melt polymerization temperatures between about 200° to 400°C and preferably 230° to 300°C can be employed. Any order of addition of chain stoppers ordinarily employed in melt polymerization can be employed. The conditions of the reaction and the proportions of ingredients can be varied widely depending on the desired molecular weight, intrinsic viscosity, and solvent resistance. In general, equimolar amounts of diamine and dianhydride are employed for high molecular weight polyetherimides, however, in certain instances, a slight molar excess (about 1 to 5 mole percent) of diamine or dianhydride can be employed. The polyetherimides of Formula I have an intrinsic viscosity [$\eta$] greater than 0.2 deciliters per gram, preferably 0.35 to 0.60, or 0.7 deciliters per gram or even higher when measured in m-cresol at 25°C.

The aromatic bis(ether anhydride)s of Formula III include, for example,
2,2-bis[4-(2,3-dicarboxyphenoxy)phenyl]-propane dianhydride;
4,4'-bis(2,3-dicarboxyphenoxy)diphenyl ether dianhydride;
1,3-bis(2,3-dicarboxyphenoxy)benzene dianhydride;
4,4'-bis(2,3-dicarboxyphenoxy)diphenyl sulfide dianhydride;
1,4-bis(2,3-dicarboxyphenoxy)benzene dianhydride;
4,4'-bis(2,3-dicarboxyphenoxy)benzophenone dianhydride;
4,4'-bis(2,3-dicarboxyphenoxy)diphenyl sulfone dianhydride;
2,2-bis[4-(3,4-dicarboxyphenoxy)phenyl]-propane dianhydride;
4,4'-bis(3,4-dicarboxyphenoxy)diphenyl ether dianhydride;
4,4'-bis(3,4-dicarboxyphenoxy)diphenyl sulfide dianhydride;
1,3-bis(3,4-dicarboxyphenoxy)benzene dianhydride;
1,4-bis(3,4-dicarboxyphenoxy)benzene dianhydride;
4,4'-bis(3,4-dicarboxyphenoxy)benzophenone dianhydride;
4-(2,3-dicarboxyphenoxy)-4'-(3,4-dicarboxyphenoxy)diphenyl-2,2-propane dianhydride; etc. and mixtures of such dianhydrides.

The organic diamines of Formula IV include, for example, m-phenylenediamine, p-phenylenediamine, 4,4'-diaminodiphenylpropane, 4,4'-diaminodiphenylmethane,benzidine, 4,4'-diaminodiphenyl sulfide, 4,4'-diaminodiphenyl sulfone, 4,4'-diaminodiphenyl ether, 1,5-diaminonaphthalene, 3,3'-dimethylbenzidine and, 3,3'-dimethoxybenzidine.

The polyetherimides of formula (II) may, for example, be prepared by effecting reaction in the presence of a dipolar aprotic solvent of a mixture of ingredients comprising, for instance, (1) a bis(nitrophthalimide) of the general formula:

(V) 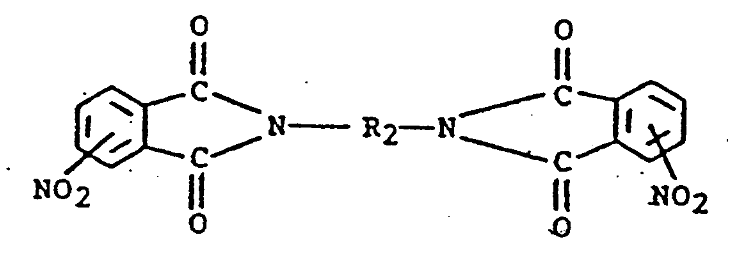

wherein $R_2$ is defined as hereinabove, and (2) an alkali metal salt of an organic compound of the general formula:

(VI) $MO-R_1-OM$

wherein M is an alkali metal and $R_1$ is defined as hereinabove.

The bis(nitrophthalimide) used in preparing the polymer is formed by reacting a diamine of the formula described above, $NH_2-R_1-NH_2$, with a nitro-substituted aromatic anhydride of the formula:

(VII)

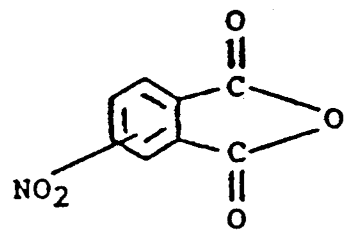

The molar ratio of diamine to anhydride should ideally be about 1:2 respectively. The initial reaction product is a bis(amide-acid) which is subsequently dehydrated to the corresponding bis(nitrophthalimide).

The diamines are described, supra.

The preferred nitrophthalic anhydrides useful herein are 3-nitrophthalic anhydride, 4-nitrophthalic anhydride, and mixtures thereof. These reactants are commercially available in reagent grade. They may also be prepared by the nitration of phthalic anhydride using procedures described in Organic Syntheses, Collective Vol. I, Wiley (1948), page 408. Certain other closely related nitroaromatic anhydrides may also be used in the reaction and are illustrated for example by 2-nitrophthalic anhydride, 1-nitro-2,3-naphthalenedicarboxylic acid anhydride, 3-methoxy-6-nitrophthalic anhydride, and the like.

With reference to the alkali metal salts of formula VI among the divalent carbocyclic aromatic radicals which $R_1$ may represent (mixtures of such radicals are also included) are, for instance, divalent aromatic hydrocarbon radicals of from 6 to 20 carbon atoms, such as phenylene, biphenylene, naphthylene, etc. Included are residues of, e.g. hydroquinone, resorcinol, chlorohydroquinone, etc. In addition, $R_1$ may be a residue of a dihydroxy diarylene compound in which the aryl nuclei are joined by either an aliphatic group, a sulfoxide group, sulfonyl group, sulfur, carbonyl group or oxygen.

Typical of such diarylene compounds are the following:
2,4-dihydroxydiphenylmethane;
bis(2-hydroxyphenyl)methane;
2,2-bis(4-hydroxypenyl)propane;
bis(4-hydroxyphenyl)methane;
bis(4-hydroxy-5-nitrophenyl)methane;
bis(4-hydroxy-2,6-dimethyl-3-methoxy-phenyl)methane;
1,1-bis(4-hydroxyphenyl)ethane;
1,2-bis(4-hydroxypenyl)ethane;
1,1-bis(4-hydroxy-2-chlorophenyl)ethane;
1,1-bis(2,5-dimethyl-4-hydroxyphenyl)ethane;
1,3-bis(3-methyl-4-hydroxyphenyl)propane;
2,2-bis(3-phenyl-4-hydroxyphenyl)propane;
2,2-bis(3-isopropyl-4-hydroxyphenyl)propane;
2,2-bis(4-hydroxynaphthyl)propane;
hydroquinone;
naphthalene diols;
bis(4-hydroxyphenyl)ether;
bis(4-hydroxyphenyl)sulfide;
bis(4-hydroxyphenyl)sulfone; and the like.

When dialkali metal salts of formula VI are used with the compound illustrated by formula V, the ingredients are advantageously present in an equal molar ratio for optimum molecular weight and properties of the polymer. Slight molar excesses, e.g., about 0.001 to 0.10 molar excess of either the dinitro-substituted organic compound or of the dialkali metal salt of formula VI may be employed. When the molar ratios are approximately equal, the polymer is substantially terminated by $Z\text{-}NO_2$ at one end and a phenolic group at the other end. If there is a molar excess of one compound, that particular terminal group will predominate.

The conditions of reaction whereby the alkali-metal salt of formula VI is reacted with the dinitro-substituted organic compound of formula V can be varied widely. Generally, temperatures of the order of about 25-150°C are advantageously employed, although it is possible to employ lower or higher temperature conditions depending on the ingredients used, the reaction product sought, time or reaction, solvent employed, etc. In addition to atmospheric pressure, superatmospheric pressures and subatmospheric pressures may be employed depending upon the other conditions of reaction, the ingredients used, the speed at which it is desired to effect reaction, etc.

The time of reaction also can be varied widely depending on the ingredients used, the temperature, the desired yield, etc. It has been found that times varying from about 5 minutes to as much as 30 to 40 hours are advantageously employed to obtain the maximum yield and desired molecular weight. Thereafter the reaction product can be treated in the appropriate manner required to effect precipitation and/or separation of the desired polymeric reaction product. Generally, common solvents such as alcohols (e.g. methanol, ethanol, isopropyl alcohol, etc.) and aliphatic hydrocarbons (e.g. pentane, hexane, octane, cyclohexane, etc.) may be employed as precipitants for this purpose.

It is important that the reaction between the dinitro-substituted organic compound of formula V and the alkali-metal salt of formula VI (mixtures of such alkali-metal salts can also be used) be carried out in the presence of a dipolar aprotic solvent.

The polymerization is performed under anhydrous conditions usually using dipolar aprotic solvents such as dimethylsulfoxide which are added in varying amounts depending upon the particular polymerization. A total quantity of solvent, dipolar aprotic solvent or mixture of such solvent with an aromatic solvent sufficient to give a final solution containing 10-20% by weight of polymer is preferably employed.

The preferred poly(etherimide) polymers include those having repeating units of the following formula:

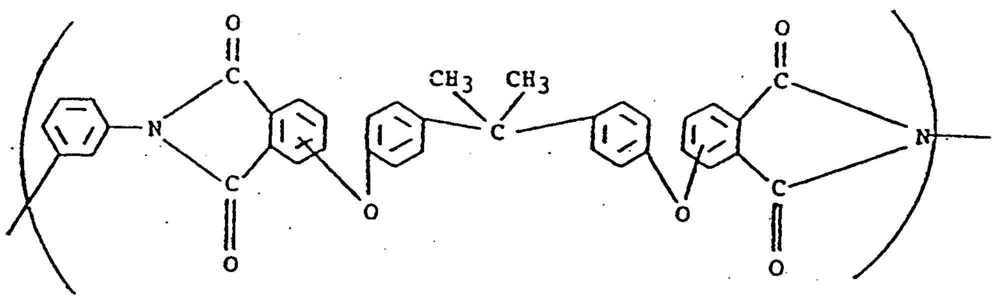

The lactams which may be used according to the present invention are all those which are capable of being polymerized anionically and are preferably those lactam monomers which contain at least one ring group of the structure

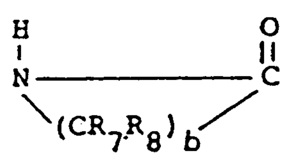

wherein b is a whole number which is 3 to 15, and preferably 3 to 10, and $R_7$ and $R_8$ may be the same or different radicals on each carbon atom and may be H or $C_1$ to $C_{10}$ hydrocarbon.

Such lactams would include those having a single ring structure such as 2-pyrrolidone, 2-piperidone, 6-methyl-2-piperidone, ϵ-caprolactam, enantholactam, capryllactam, lauryllactam, decanolactam, undecanolactam, dodecanolactam, pentadecanolactam, hexadecanolactam, alkyl substituted caprolactams, aryl substituted lactams, and the like.

Lactams having a plurality of ring structures which may be used in the present invention include bis-lactams such as alkylene bis-lactams of the formula:

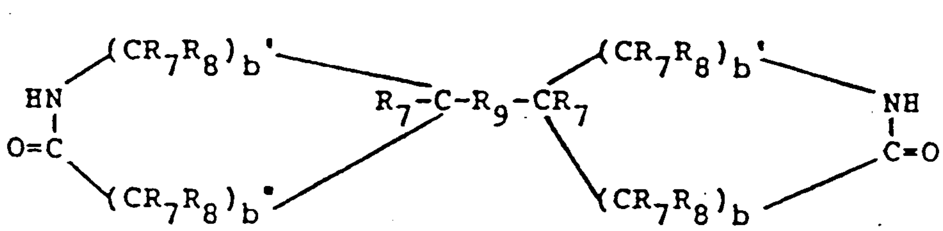

wherein b′ and b″ are independently integers of from 1 to about 14; $R_7$ and $R_8$ are as defined above and $R_9$ may be $C_1$ to $C_4$ alkylene such as methylene, ethylene, propylene, and butylene; phenylene and substituted phenylene; O and S.

Other lactams having a plurality of ring structures include bicyclic lactams, such as those represented by the formulae:

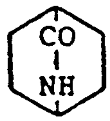

and

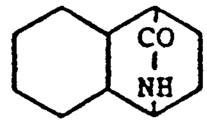

The lactams to be polymerized can be used individually or in any combination thereof.

The initiators are the poly(etherimides) of the above formulae (I) and (II).

These poly(etherimides) may be obtained by the procedure described above using a slight excess of the corresponding reagent in the polymerization reaction.

The block copolymers prepared by the process of the present invention are block copolymers of the AB and ABA types, wherein A represents a block of lactam polymer and B represents the poly(etherimide) block. In the usual case these two types of block copolymers are concurrently prepared in the polymerization reaction. These two types of block copolymers may also be represented by the structures

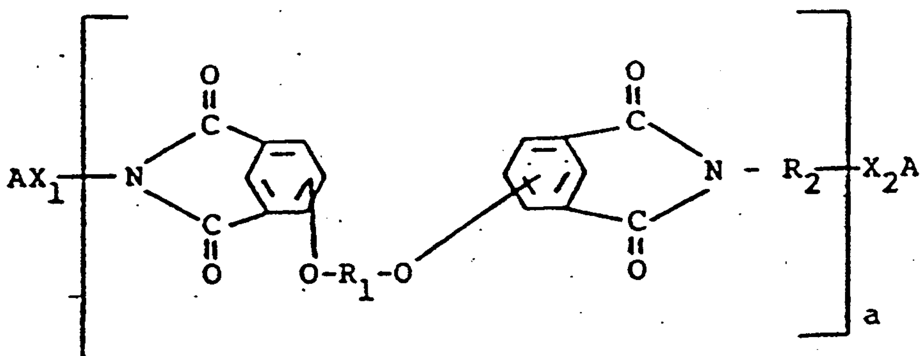

or

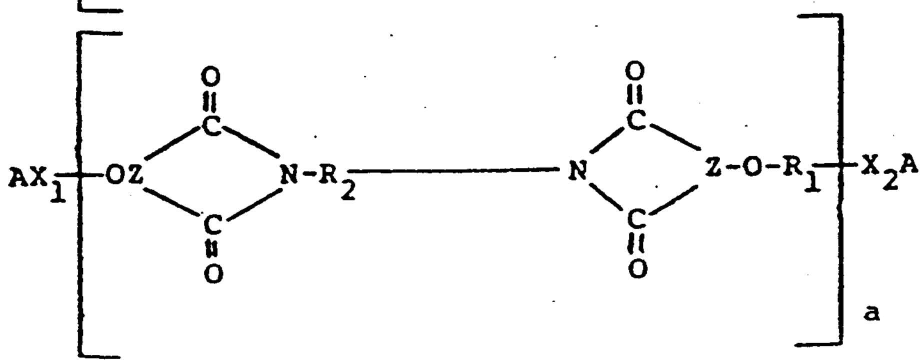

for the ABA copolymers and

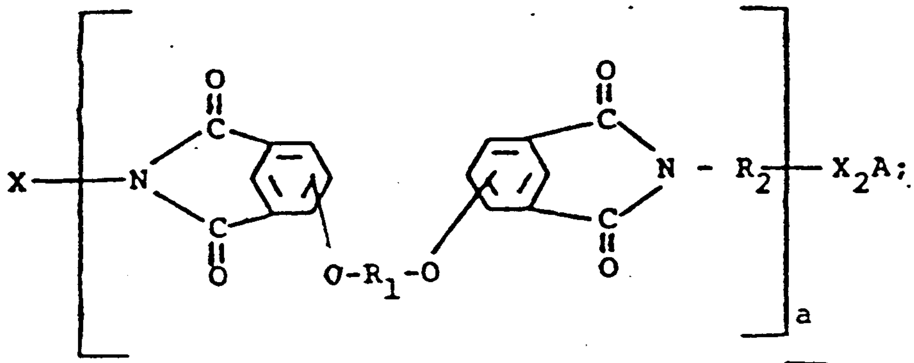

; or

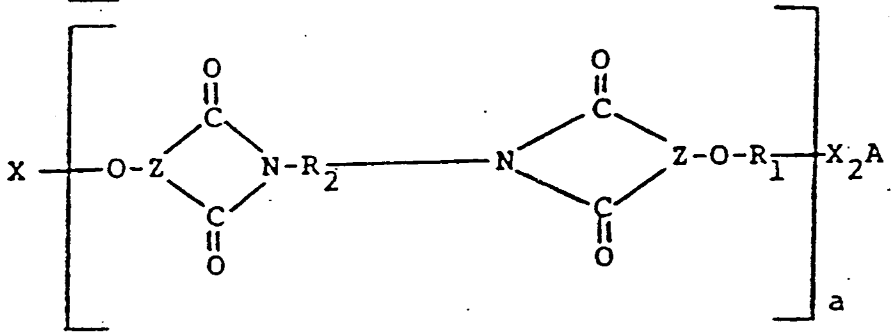

and

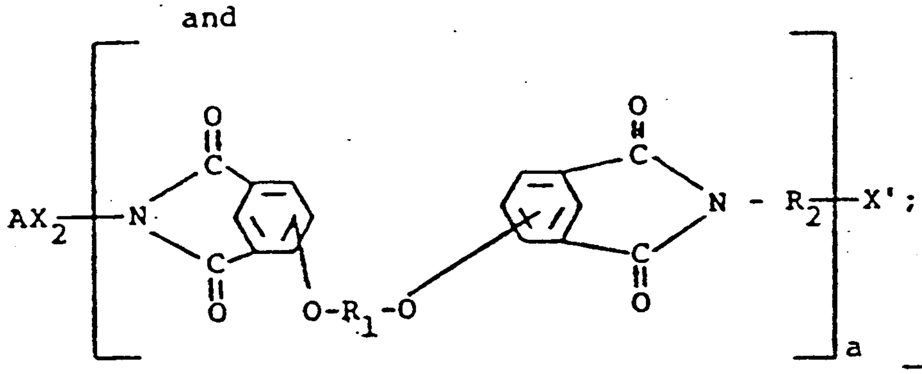

; or

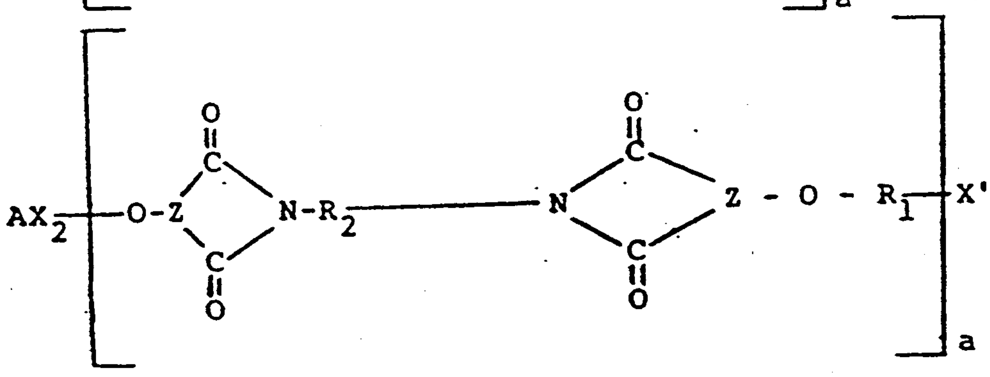

for the AB type block copolymers.

$R_1$, $R_2$, Z, a and X and X' are as defined above.

$X_1$ and $X_2$ are residues of the reaction between the initiator terminals X and X′, respectively, and the salt of the lactam being polymerized. For example, when X is Hal and X′ is Hal, then X or $X^1$ are Hal and $X_2$ is a chemical bond.

The A chains of lactam monomer attach to the initiator at the site of, and upon the removal during the initiating reaction of, all or part of one or both of the terminal groups.

The block copolymers formed from the poly(etherimide) and lactams disclosed above are unique semicrystalline materials which have physical properties which are superior in various respects to either a homopolymer of the corresponding lactam or to the poly(etherimide) polymers. They are superior, for example, to the lactam homopolymers because they have higher heat distortion temperatures, particularly in the case where the lactam is $\epsilon$-caprolactam and the lactam homopolymer is thus a nylon-6 polymer. In such instances of comparison the block copolymers of the present invention would have heat distortion temperatures up to about 60°C. or more higher than the heat distortion temperature of the nylon-6 homopolymer where the block copolymer contains at least 10 to 15 weight percent of the poly(etherimide) as a block of the copolymer. The block copolymers also have lower hydrophilicity and better thermal stability properties than the corresponding lactam homopolymers. The block copolymers are also better than the poly(etherimide) materials from which they are formed because they have improved stress crack resistance properties and improved resistance to various types of environments. The block copolymers also have improved processability in that they may be processed at temperatures which are up to 100°C. lower than the temperatures at which the poly(etherimide) materials may be processed. Blends of the block copolymer with poly(etherimide) would provide a useful property profile. The block copolymer blend with poly(etherimide) will offer improved mechanical compatibility over simple blends of polyamides and poly-(etherimides).

The preferred copolymers prepared by the process of the present invention are those which contain about 20 to 80 weight percent of the lactam monomer in the form of block segments therein, and 80 to 20 weight percent of the poly(etherimide) materials as block segments therein.

The catalysts which may be employed in the anionic polymerization reaction of the present invention include all anionic catalyst materials which may be employed in the anionic polymerization of lactams. The catalyst material is usually a salt of the lactam being polymerized although any other lactam may be used to form the catalyst. The salt is usually prepared by reacting the lactam with a strong base, i.e., a base strong enough to convert the lactam to its salt. Such bases would include alkali and alkaline earth metals or basic derivatives of such metals such as the hydroxides, oxides, alkoxides, phenoxides, hydrides, alkyls, aryls, amides, borohydrides and weak acid salts, i.e., acetates, carbonates, bicarbonates, benzoates, sulfites and bisulfites; Grignard reagents, and various other organo-metallic compounds. Such bases would include, therefore, metals such as lithium, sodium, potassium, magnesium, calcium, strontium, barium, and aluminum and derivatives of such metals, such as lithium hydroxide, sodium hydroxide, potassium hydroxide, magnesium hydroxide, calcium hydroxide, strontium hydroxide, barium hydroxide, lithium hydride, sodium hydride, sodium oxide, sodium methoxide, sodium phenoxide, sodium methyl, sodium ethyl, sodium phenyl, sodium naphthyl, and sodamide; Grignard reagents such as ethyl magnesium chloride, methyl magnesium bromide, and phenyl magnesium bromide; and other compounds such as zinc diethyl, triisopropyl aluminum, diisobutyl aluminum hydride, and lithium aluminum hydride.

About 0.2 to 20, and preferably 0.5 to 4, mole percent of catalyst is used per mole of monomer being polymerized.

The catalyst and initiator are employed in a mole ratio to each other of about 2 to 200, and preferably, 3 to 10.

When the strong base is reacted with the lactam to form the catalyst a by-product is usually formed. For example, hydrogen is formed as a by-product when the metal hydrides or the elemental metals are used; water is formed as a by-product when metal hydroxides are used; alcohols are formed when alkoxides are used and water and $CO_2$ are formed when carbonate or bicarbonate salts are used. The preferred catalysts are those which result in the most readily removable by-products, since some of the by-products, such as $H_2O$, may have a deleterious effect on the polymerization reaction.

The polymerization reaction is preferably conducted in bulk. Under such bulk polymerization procedures the poly(etherimide) initiator is preferably dissolved in the monomeric lactam. This can be accomplished easily at temperatures between 80°C and 250°C. When initiators are used which contain less reactive end groups, e.g., halogen then the solution of initiator in lactam monomer may be stored in the liquid or molten state at temperatures which are slightly above the melting point of the monomeric lactam, i.e., about 70-75°C for $\epsilon$-caprolactam monomers, for up to about 40 hours without any appreciable change in the viscosity of the system or potency of the catalyst-initiator system. This provides an unusually long pot life for the molten system at such temperatures. The pot life is shorter at higher temperatures, i.e., between about 80°C. and about 130°C. for $\epsilon$-caprolactam, and at temperatures of about 130°-240°C. the $\epsilon$-caprolactam polymerization reaction proceeds within a few minutes when using polymeric initiators having such halogen terminals. The reaction will proceed even faster under such temperature conditions when other terminal groups are used on the initiator. The bulk polymerization reaction is usually conducted at atmospheric pressure and at a temperature of about 130° to 260°C. The reaction can be conducted at a temperature which is above or below the melting point of the resulting polymer, and above that of the

monomer. The use of elevated pressure is not required for the polymerization reaction. The bulk polymerization reaction requires a polymerization period of about 30 to 100 minutes at 130°-220°C. depending on the lactam(s) employed, the catalyst concentration, and the polymerization temperature. The bulk polymerization reaction should be carried out under anhydrous conditions, i.e., in the presence of no more than about 0.2 weight percent, and preferably no more than 0.03 weight percent, of water or other active hydrogen containing by-product. Where a catalyst is used which would generate water or other active hydrogen containing by-products, such as the hydroxide, alkoxide or phenoxide catalysts, the excess amounts of such by-product materials should be removed before the polymerization reaction is conducted.

The polymerization is preferably carried out under an inert blanket of gas, such as, nitrogen, argon or helium in order to prevent oxidative degradation of the monomer and of destruction of the catalyst by moisture.

The reaction may be carried out batchwise or continuously. An advantageous method of carrying out the reaction of the present invention is to conduct the bulk polymerization in conventional molding equipment such as a rotational casting device or a compression molding machine, or an extruder. In this way the polymer and the molded objects can both be formed in one step. Where the polymerization is conducted in such molding devices, conventional molding pressures may be employed in order to simultaneously form the molded object with the in situ formed polymer.

Since the lactams are normally solid materials at room temperatures, the bulk polymerization reactions may be carried out by various procedures. In one procedure, the lactam may be melted, and both the catalyst and the initiator admixed with it and then the reaction may be caused to proceed by bringing the reaction mixture to polymerization temperatures.

In another procedure, the catalyst and initiator may be dissolved separately in the lactam monomer, after which the two separate solutions may be combined to cause the polymerization to proceed at polymerization temperatures. Where the polymerization is conducted in molding equipment, the equipment may be heated to the desired polymerization temperature in order to effect polymerization upon injection therein of the polymerization reaction system.

In addition to being conducted in bulk, the polymerization may also be conducted in high boiling inert organic solvents, i.e., those having boiling points of above 100°C., such as chlorobenzene, dichlorobenzene, xylene, trichlorobenzene, N-alkyl pyrrolidones and hexamethylphosphoramide, at temperatures of about 100°C. up to the boiling point of the solvent; or at temperatures of about 130 to 240°C. in dispersion systems such as those disclosed in US-A-3,061,592 and 3,383,352, and by G.B. Gechele and G.F. Martins in J. Applied Polymer Science, 9, 2939 (1965).

The polymerization reaction of the present invention may also be conducted in the presence of various types of materials which are normally employed with the types of polymers prepared by the process of the present invention, or the material may be added to the polymer after it is formed. Such materials would include fillers, stabilizers, fibrous reinforcing agents such as glass fiber, and pigmenting materials.

The reaction can also be carried out in the presence of thermoplastic polymers which are inert under the reaction conditions such as polyolefins and copolymers thereof, aromatic vinyl polymers and copolymers thereof, polyphenylene oxides, poly(arylethers), and the like.

## EXAMPLE

The following example serves to give a specific illustration of the practice of this invention but is not intended in any way to limit the scope of this invention. In said example, all parts and percentages are on a weight basis unless otherwise specified.

### Example

### Preparation of the poly(etherimide)-polylactam block copolymer

To a dry 500 milliliter (ml), three neck flask fitted with a mechanical stirrer, nitrogen inlet tube and a distillate receiver attached to a condenser were added 62.5 grams of a poly(etherimide) having a reduced viscosity of 0.51 as measured in chloroform (0.5 g per 100 ml) at 25°C and having repeating units of the following formula:

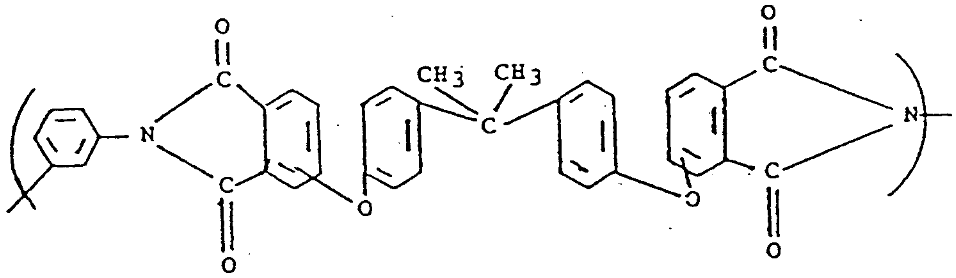

100 ml of chlorobenzene, and 220 ml of freshly distilled ε-caprolactam (1.95 moles = 220 gms). Stirring and circulation of dry nitrogen were started. The solution was heated (oil-bath) and 90% of the chlorobenzene was distilled off (time of distillation: 2.0 hours). A substantially dry solution of the polymer in the lactam was left in the flask as the residue.

In a separate, dry 100 ml flask fitted with a magnetic stirrer, a nitrogen-inlet tube, and a condenser were placed 30 ml of distilled ε-caprolactam. Heating of this material was accomplished via an oil bath. To the partially solidified ε-caprolactam was added 0.48 grams (0.8 gm of a 60-40 by weight dispersion in mineral oil) of sodium hydride (0.02 moles). The flask was slowly heated to 80 °C, and the hydrogen gradually evolved to yield a clear solution of the catalyst (1 hour).

Twenty-seven milliliters of this catalyst solution (1.80 x $10^{-2}$ moles) were transferred via syringe to the polymer solution in ε-caprolactam. The oil bath temperature was kept at 185 °C for 40 minutes, and no visible increase in viscosity was observed. The mixture was cooled to 140 °C, and another 0.48 g (0.8 gm of a 60-40 by weight dispersion in mineral oil) of solid sodium hydride (0.02 mole) was added. The oil bath temperature was raised to 220 °C. A rapid increase in viscosity was observed and at the end of a 75 minute period the reaction was considered complete. The resulting block copolymer product was cooled under nitrogen. The solid cold copolymer was highly crystalline and tough. A mechanical grinder was used to break the material into small particles. The yield of this crude product was quantitative.

The crude material was extracted with methanol in a soxhlet apparatus. The extracted material was vacuum dried till constant weight at 100 °C. The yield of methanol-insoluble block copolymer was 91.1%. It's RV (reduced viscosity) was 0.69 as measured in m cresol at 25 °C (0.1 gm/100ml).

## Claims

1. A process for preparing a block copolymer comprising one or two blocks of lactam polymer and one block of a poly(etherimide) polymer which comprises anionically polymerizing a lactam monomer with a catalyst-initiator system comprising, as the initiator, one or more poly(etherimides) of the following formulae (I) or (II):

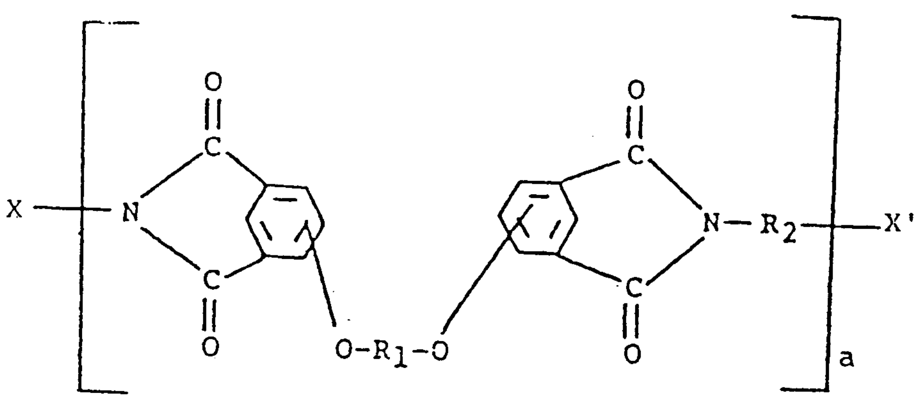

(I)

wherein a is an integer greater than 1, $-O-R_1-O-$ is attached to the 3 or 4 and 3' or 4' positions and $R_1$ is selected from (a) a substituted or unsubstituted aromatic radical of the formula:

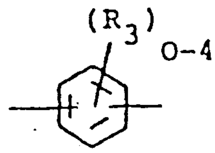

, or

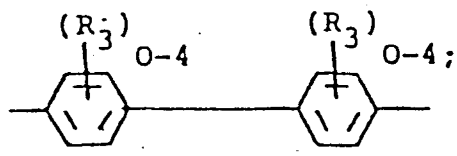

(b) a divalent radical of the formula:

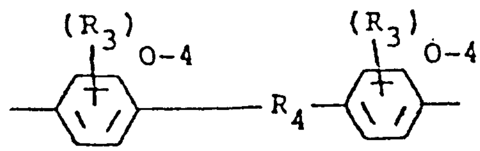

wherein $R_3$ is independently $C_1$ to $C_6$ alkyl, or halogen and
$R_4$ is selected from -O-, -S-,

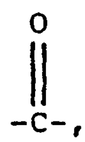

-SO, $-SO_2-$ alkylene of 1 to 6 carbon atoms, cycloalkylene of 4 to 8 carbon atoms, alkylidene of 1 to 6 carbon atoms or cycloalkylidene of 4 to 8 carbon atoms, $R_2$ is selected from an aromatic hydrocarbon radical having from 6-20 carbon atoms and halogenated derivatives thereof, or alkyl substituted derivatives thereof, wherein the alkyl group contains 1 to 6 carbon atoms, alkylene and cycloalkylene radicals having from 2 to 20 carbon atoms, $C_2$-$C_8$ alkylene terminated polydiorganosiloxane and a divalent radical of the formula

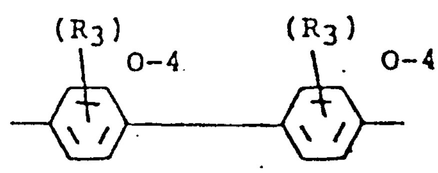

wherein the radicals $R_3$ are as previously defined; X and X' are independently halogen, $NO_2$ or an anhydride terminated moeity;

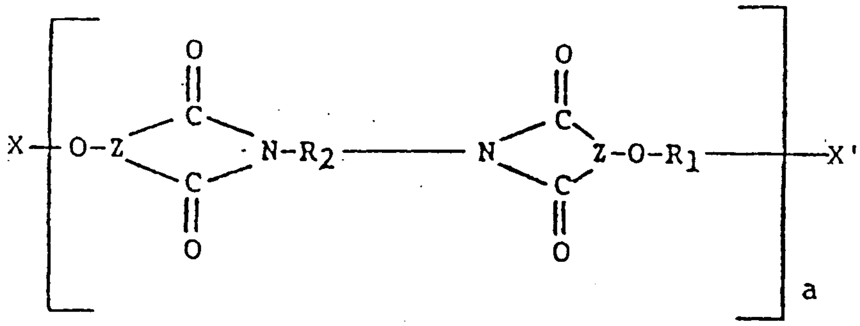

(II)

wherein -O-Z is a member selected from

(a) 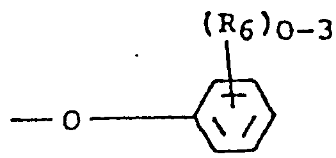

wherein $R_6$ is independently hydrogen, lower alkyl or lower alkoxy

(b) 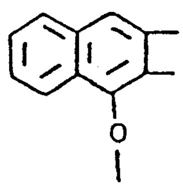 and,

(c) 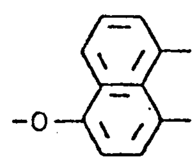

wherein the oxygen may be attached to either ring and located ortho or para to one of the bonds of the imide carbonyl groups and $R_1$, $R_2$, X, X' and a are as defined above.

**Revendications**

**1.** Procédé de préparation d'un copolymère séquencé comprenant une ou deux séquences de polymère de lactame et une séquence d'un polymère de poly(étherimide) dans lequel on effectue une polymérisation anionique d'un monomère de lactame avec un système inducteur de catalyseur comprenant, comme inducteur, un ou plusieurs poly(étherimides) de formules (I) ou (II) ci-dessous:

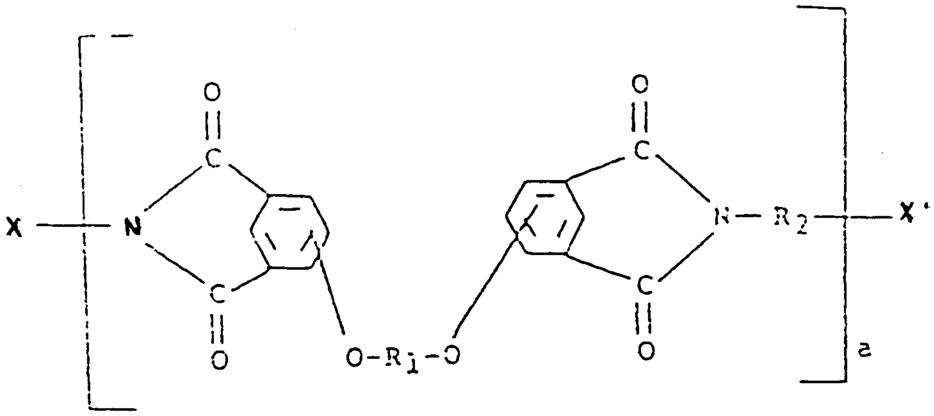

(I)

dans lesquelles a est un nombre entier supérieur à 1, -O-$R_1$-O- est attaché aux positions 3 ou 4 et 3' ou 4' et $R_1$ est choisi parmi (a) un radical aromatique substitué ou non substitué de formule

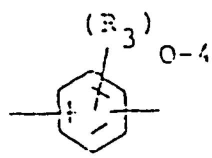

, ou

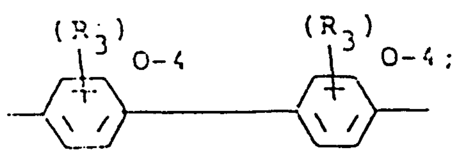

(b) un radical bivalent de formule:

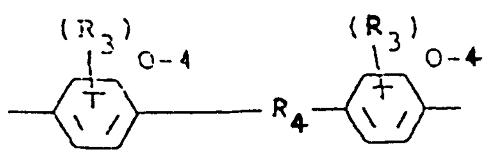

dans laquelle $R_3$ représente indépendamment un alkyle en $C_1$ à $c_6$ , ou un halogène, et $R_4$ est choisi parmi -O-, -S-,

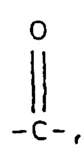

-SO-, -$SO_2$- alkylène en $C_1$ à $C_6$ , cycloalkylène en $C_4$ à $C_8$ , alkylidène en $C_1$ à $c_6$ ou cycloalkylidène en $C_4$ à $C_8$ , $R_2$ est choisi parmi les radicaux hydrocarbonés aromatiques ayant de 6 à 20 atomes de carbone etleurs dérivés halogénés, ou leurs dérivés alkyl-substitués, où le groupe alkyle contient de 1 à 6 atomes de carbone, les radicaux alkylène et cycloalkylène ayant de 2 à 20 atomes de carbone, les polydiorganosiloxanes à terminaison alkylène en $C_2$ à $C_8$ et un radical bivalent de formule

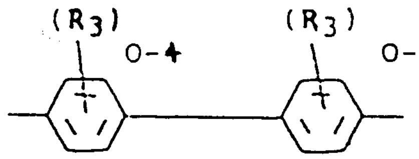

dans laquelle les radicaux $R_3$ sont tels que définis ci-dessus; X et X' représentent indépendamment un halogène, $NO_2$ ou une partie à terminaison anhydride;

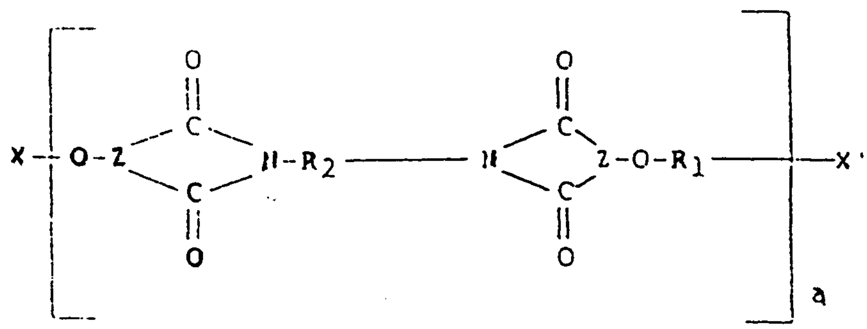

(II)

où -O-Z est un membre choisi parmi

(a)

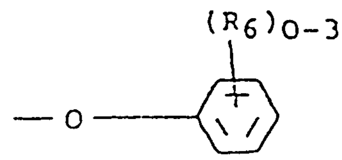

où $R_6$ est indépendamment un hydrogène, alkyle inférieur ou alcoxy inférieur

(b)

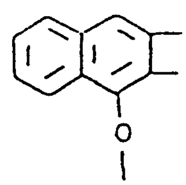

et

(c)

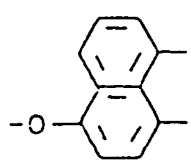

où l'oxygène peut être attaché à l'un ou l'autre noyau et situé en ortho ou en para par rapport à une des liaisons des groupes carbonyles d'imides, et $R_1$ , $R_2$ , X, X' et a sont tels que définis ci-dessus.

**Patentansprüche**

**1.** Verfahren zur Herstellung eines Blockcopolymers, das ein oder zwei Blöcke Lactam-Polymer und einen Block eines Poly(etherimid)-Polymers umfaßt, umfassend die anionische Polymerisation eines Lactam-Monomers mit einem Katalysator-Initiator-System, welches als Initiator ein oder mehrere Poly-(etherimide) der folgenden Formeln (I) oder (II) umfaßt:

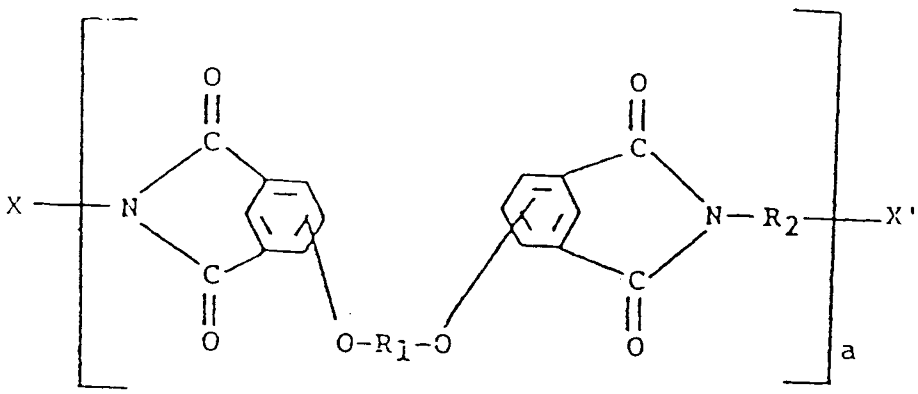

(I)

worin a eine ganze Zahl größer 1 ist, $-O-R_1-O-$ an die 3- oder 4- und 3'- oder 4'-Positionen gebunden ist und $R_1$ ausgewählt ist aus

(a) einem substituierten oder unsubstituierten aromatischen Rest der Formel:

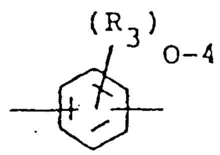

oder

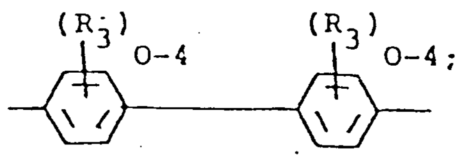

(b) einem zweiwertigen Rest der Formel:

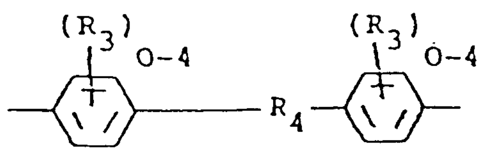

worin $R_3$ unabhängig $C_1$-$C_6$ Alkyl oder Halogen bedeutet und
$R_4$ ausgewählt ist aus -O-, -S-,

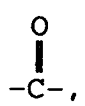

-SO-, $-SO_2-$, Alkylen mit 1 bis 6 Kohlenstoffatomen, Cycloalkylen mit 4 bis 8 Kohlenstoffatomen, Alkyliden mit 1 bis 6 Kohlenstoffatomen oder Cycloalkyliden mit 4 bis 8 Kohlenstoffatomen,
$R_2$ ausgewählt ist aus einem aromatischen Kohlenwasserstoffrest mit 6 bis 20 Kohlenstoffatomen und halogenierten Derivaten davon oder Alkyl-substituierten Derivaten davon, worin die Alkylgruppe 1 bis 6 Kohlenstoffatome aufweist, Alkylen- und Cycloalkylenresten mit 2 bis 20 Kohlenstoffatomen , einem Polydiorganosiloxan mit $C_2$-$C_8$ Alkylen-Endgruppe(n) oder einem zweiwertigen Rest der Formel

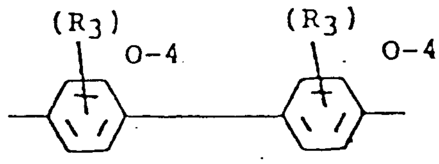

worin die Reste $R_3$ wie oben definiert sind;
X und X' unabhängig Halogen, $NO_2$ oder eine Gruppierung mit Anhydrid-Endgruppe(n) darstellen;

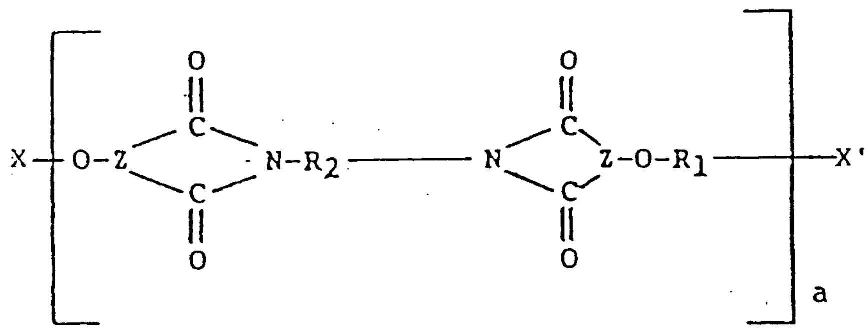

(II)

worin -O-Z ein Element darstellt, das aus (a)

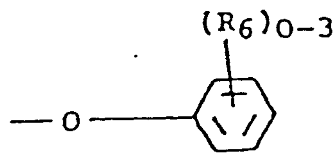

worin $R_6$ unabhängig Wasserstoff, Niederalkyl oder Niederalkoxy bedeutet,

(b) 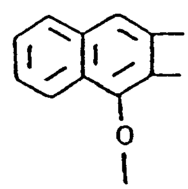 und

(c) 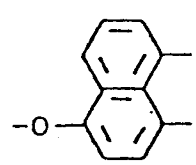

ausgewählt ist, worin der Sauerstoff an irgendeinen der Ringe gebunden sein kann und in o- oder p-Stellung zu einer der Bindungen der Imidcarbonylgruppen lokalisiert ist, und $R_1$, $R_2$, X, X' und a wie oben definiert sind.